# EUROPÄISCHE PATENTANMELDUNG

(11) **EP 2 712 663 A1**
(43) Veröffentlichungstag der Anmeldung: **02.04.2014**
(21) Anmeldenummer: 13186653.5
(22) Anmeldetag: 30.09.2013
(51) Int. Cl.: B01D 3/00, B01D 17/02

(54) **Verfahrenstechnischer Apparat, insbesondere Kolonne, mit einem horizontalen Zulauf für ein Fluid, insbesondere Zweiphasenströmung, und einer Umlenkeinheit für das Fluid**

(30) Priorität: 01.10.2012 EP 12186774
(71) Anmelder: BASF SE, 67056 Ludwigshafen (DE); BASF Schweiz AG, 4057 Basel (CH)
(72) Erfinder: Kunkelmann, Christian, 64367 Mühltal (DE); Ottenbacher, Markus, 69259 Wilhelmsfeld (DE); Bechtel, Marcus, 69123 Heidelberg (DE)
(74) Vertreter: Stößel, Matthias

(57) **Zusammenfassung**

Die Erfindung betrifft einen verfahrenstechnischen Apparat (102), insbesondere eine Kolonne (122), mit einem Gehäuse (104) und einem in das Gehäuse (104) mündenden Zulauf (106) für ein Fluid (128), wobei der Zulauf (106) zumindest annähernd horizontal ausgerichtet ist, und mit einer zwischen der Mündung (108) des Zulaufs (106) und der Mitte des Apparats (102) angeordneten Umlenkeinheit (110) für das Fluid (128), wobei die Umlenkeinheit (110) eine Prallplatte (112) für das Fluid (128) aufweist, welche horizontal von der Mündung (108) des Zulaufs (106) beabstandet angeordnet und dem Zulauf (106) zugewandt ist. Der erfindungsgemäße Apparat (102) ist unter anderem hinsichtlich der Eindämmung einer unerwünschten vertikalen Ausdehnung des zugeführten Fluids (128) auf der Innenwand des Gehäuses (104) und/oder einer Eindämmung oder Verhinderung einer horizontalen Fehlverteilung des zugeführten Fluids (102) innerhalb des Apparats (102) so weitergebildet, dass die Prallplatte (112) so angeordnet und/oder zumindest in Teilbereichen so ausgestaltet ist, dass dem auf die Prallplatte (112) auftreffenden Fluid (128) eine vertikal nach unten gerichtete Impulskomponente aufgeprägt wird.

## Beschreibung

Die vorliegende Erfindung betrifft einen verfahrenstechnischen Apparat, mit einem Gehäuse und einem in das Gehäuse mündenden Zulauf für ein Fluid, wobei der Zulauf zumindest annähernd horizontal ausgerichtet ist, und mit einer zwischen der Mündung des Zulaufs und der Mitte des Apparats angeordneten Umlenkeinheit für das Fluid, wobei die Umlenkeinheit eine Prallplatte für das Fluid aufweist, welche horizontal von der Mündung des Zulaufs beabstandet angeordnet und dem Zulauf zugewandt ist, nach der Gattung des Anspruchs 1.

Aus dem Stand der Technik sind verschiedene Ausgestaltungen gattungsgemäßer verfahrenstechnischer Apparate bekannt. Insbesondere können gattungsgemäße verfahrenstechnische Apparate Kolonnen betreffen, ohne jedoch hierauf eingeschränkt zu werden. Bei Kolonnen handelt es sich im Allgemeinen um verfahrenstechnische Apparate in Form einer schlanken, stehenden Säule, wobei ein im Wesentlichen hohler Innenraum von einem oftmals zylindrischen Gehäuse umgeben wird. Des Weiteren verfügen Kolonnen verbreitet über interne Einbauten, welche der Energie- und/oder Stoffübertragung zwischen verschiedenen Phasen dienen, und/oder deren Rückvermischung verhindern.

Ein verbreiteter Einsatzzweck solcher Kolonnen ist die Rektifikation, wobei zwei Phasen mit unterschiedlicher Zusammensetzung im Gegenstrom geführt werden. Auch zu Absorptionsprozessen werden Kolonnen eingesetzt. Daneben gibt es eine Reihe weiterer Einsatzzwecke für Kolonnen, welche dem einschlägigen Fachmann jedoch geläufig sind.

Sofern im Folgenden Unzulänglichkeiten des Stands der Technik sowie Wesen und Vorteile der vorliegenden Erfindung beispielhaft an Kolonnen erläutert werden, ist damit keine Einschränkung gattungsgemäßer verfahrenstechnischer Apparate auf solche Kolonnen verbunden.

Ein weiterer gattungsgemäßer verfahrenstechnischer Apparat betrifft beispielsweise einen Abscheider zum Trennen von Zwei- oder Mehrphasengemischen. Auch solche Apparate sind dem Fachmann geläufig.

Genannte Apparate weisen im Allgemeinen zumindest einen in das Gehäuse mündenden Zulauf (Feed) für ein Fluid auf, um das zugeführte Fluid bspw. in einer der oben erläuterten Arten einem entsprechenden Prozessschritt zuzuführen. Bei dem Fluid kann es sich um ein einphasiges Fluid (insbesondere eine Flüssigkeit) handeln. Oft ist ein solcher Zulauf jedoch zum Zuführen oder auch Eindüsen eines zwei- oder mehrphasigen Fluids eingerichtet. Insbesondere beim Zuführen eines zwei- oder mehrphasigen Fluids in das Innere des verfahrenstechnischen Apparats ergeben sich durch hohe Gasgeschwindigkeiten und das Auftreffen von trägeren Flüssigkeitsanteilen auf Einbauten oder die Innenseite des Gehäuses schwer vorherbestimmbare Strömungsverhältnisse, welche ggf, zu einer unerwünscht nachteiligen Verteilung des zugeführten Fluids bzw. bestimmter Anteile (Phasen) des zugeführten Fluids im Inneren des Apparats führen können.

Es ist daher bekannt, im Mündungsbereich solcher Zuläufe in verfahrenstechnischen Apparaten Abscheideeinheiten für das zugeführte Fluid vorzusehen, um die Verteilung des zugeführten Fluids im Inneren des Apparats zu verbessern.

So offenbart die EP 0 051 200 A1 einen Verteiler für ein Zweiphasengemisch, wobei dem Zulaufrohr eine Abscheideeinheit, welche eine ebene Prallplatte aufweist, dem Zulaufrohr rechtwinklig gegenüberliegt. Diese Lehre betrifft allerdings einen Apparat mit einem vertikal ausgerichteten Zulauf.

Vergleichsweise noch schwieriger gestaltet sich hingegen die gewünschte Verteilung eines Fluids im Inneren eines gattungsgemäßen verfahrenstechnischen Apparats, welcher einen zumindest annähernd horizontal ausgerichteten Zulauf aufweist.

Ein solcher gattungsgemäßer Apparat ist bereits aus der EP 1 018 360 A1 bekannt. Diese Schrift schlägt zur verbesserten Verteilung eines durch einen horizontalen Zulauf eingedüsten Fluids im Inneren des Apparats vor, durch eine Abscheideeinheit mit einer Prallplatte drei Teilströme zu bilden, welche derart zusammenwirken, dass eine Konzentration des zugeführten Fluids in der Mitte des Apparats stattfindet. Dazu kann die Prallplatte gelocht ausgeführt sein oder auch aus Vollmaterial bestehen (vgl, Fig. 7 der genannten Schrift). Die gattungsbildende Druckschrift geht dabei zunächst von der Zuführung eines Gasstroms durch den beschriebenen Zulauf aus, allerdings sollen auch andere Fluide wie eine Flüssigkeit oder ein Gas/Flüssigkeits-Gemisch durch den Zulauf einspeisbar sein.

Der bekannte gattungsgemäße Apparat zeigt jedoch sowohl hinsichtlich seines Betriebs als auch hinsichtlich seiner Konstruktion Nachteile.

Dies betrifft insbesondere, jedoch nicht ausschließlich Betriebsfälle, in denen durch den beschriebenen Zulauf ein Fluid mit Flüssigkeitsanteüen oder ein aus Flüssigkeit bestehendes Fluid zugeführt werden soll.

So ist im Rahmen dieser Erfindung erkannt worden, dass bei dem gattungsgemäßen Apparat die im Zulaufstrom enthaltenen Flüssigkeitstropfen auf die Prallplatte auftreffen und dort einen Flüssigkeitsfilm bilden. Dieser breitet sich aufgrund des Impulseintrags durch die aufprallenden Tropfen aus und reißt am Rand der Prallplatte ab, wodurch wiederum Tropfen gebildet werden. Diese Tropfen prallen dann auf die Gehäusewand und bilden auch dort einen Flüssigkeitsfilm. Wiederum sorgt der Impulseintrag durch die Tropfen sowie der Impulseintrag durch das in der Regel nach oben strömende Gas dafür, dass sich der Film ausbreitet.

Die vertikale Ausdehnung des Films ist problematisch, insbesondere wenn der Film schließlich oberhalb des Zulaufs angeordnete Einbauten, bspw. trennwirksame Einbauten, erreicht. Werden die Einbauten hierdurch teilweise geflutet, nimmt deren Trennleistung ab und es kann sogar zu einem Aufstauen der Flüssigkeit in den Einbauten kommen. Die Trenneffizienz und der nutzbare Betriebsbereich werden dadurch signifikant reduziert.

Bei Verwendung einer Prallplatte, die dem Stand der Technik entspricht, steigt die vertikale Ausdehnung des Films auf der Kolonnenwand stark an, wenn die Strömungsgeschwindigkeit und/oder die Flüssigkeitsbeladung im Zulaufstrom und/oder die Strömungsgeschwindigkeit des von unten kommenden Gases zunimmt. Höhere Strömungsgeschwindigkeiten im Zulauf führen aufgrund des höheren Impulseintrags durch die auftreffenden Tropfen zu einer stärker nach außen gerichteten und weniger durch die Schwerkraft beeinflussten Ausbreitung des Films auf der Prallplatte. Dies wiederum führt dazu, dass die an der Kante der Prallplatte ablösenden Tropfen eine höhere vertikale Position haben und in der Folge an einer höher liegenden Stelle auf der Kolonnenwand auftreffen und dort aufgrund ihrer höheren Geschwindigkeit einen vergleichsweise höheren Impuls in die Filmströmung eintragen.

Konkret ergeben sich hieraus u.a. zwei wesentliche Nachteile:
1. Der vertikale Abstand zwischen dem Zulauf und darüber liegenden Einbauten muss groß gewählt werden, um einen Flüssigkeitseintritt in die Einbauten zu verhindern. Dies führt zu höheren Investitionskosten.
2. Sollte zu einem späteren Zeitpunkt (z.B. im Rahmen einer Kapazitätserweiterung) eine Steigerung der Strömungsgeschwindigkeit im Zulaufstrom über den bei der Auslegung verwendeten Wert angestrebt werden, ist die zulässige Steigerung sehr stark durch die größere vertikale Ausdehnung des Films auf der Gehäusewand begrenzt.

Der als Stand der Technik skizzierte gattungsgemäße Apparat hat außerdem den Nachteil, dass ein durch den Zulauf eintretendes Gas an der Stelle der Gehäusewand, an der die Gasströmung auf die Wand auftrifft, eine starke Aufwärtsströmung verursacht (siehe Speiser et al., Chem. Technik. 39, 10 (1987), S. 430). Dadurch ist die Gasströmung in einem über dem Zulauf liegenden Querschnitt fehlverteilt, so dass über dem Zulauf liegende trennwirksame Einbauten (bspw. strukturierte oder regellose Packungen, Böden) ungleichmäßig angeströmt werden. Die Fehlverteilung ist umso stärker, je kleiner der Abstand zwischen Zulauf und darüber liegenden Einbauten gewählt wird.

Eine starke ungleichmäßige Anströmung, wie sie bei hohen Geschwindigkeiten im Zulauf oder bei geringen Abständen eintritt, wird sich negativ auf die Trennwirkung von trennwirksamen Einbauten auswirken. Die in der gattungsbildenden Druckschrift vorgeschlagene Variante einer gelochten Prallplatte vermag ggf. die Gasströmung schon in geringerer Höhe über dem Zulauf gleichmäßiger zu verteilen. Allerdings weist sie den Nachteil einer schlechteren Abscheidewirkung von im Zustrom befindlichen Flüssigkeitstropfen auf.

Der vorliegenden Erfindung liegt daher die Aufgabe zugrunde, zumindest einen der oben beschriebenen Nachteile zu lindern.

Des Weiteren liegt der vorliegenden Erfindung die Aufgabe zugrunde, einen Beitrag zur Eindämmung oder Verhinderung der beschriebenen vertikalen Ausdehnung des zugeführten Fluids auf der Gehäusewand innerhalb des verfahrenstechnischen Apparats zu leisten.

Des Weiteren liegt der vorliegenden Erfindung die Aufgabe zugrunde, einen Beitrag zur Eindämmung oder Verhinderung der beschriebenen horizontalen Fehlverteilung des zugeführten Fluids innerhalb des verfahrenstechnischen Apparats zu leisten.

Schließlich liegt der vorliegenden Erfindung die Aufgabe zugrunde, einen Beitrag zu einer kompakteren und/oder kostengünstigeren Konstruktion eines verfahrenstechnischen Apparats zu leisten.

Einen Beitrag zur Lösung mindestens einer der vorstehend genannten Aufgaben leistet ein verfahrenstechnischer Apparat der eingangs genannten Art, welcher durch die kennzeichnenden Merkmale des Anspruchs 1 weitergebildet ist.

Danach ist die Prallplatte so angeordnet und/oder zumindest in Teilbereichen so ausgestaltet, dass dem auf die Prallplatte auftreffenden Fluid eine vertikal nach unten gerichtete Impulskomponente aufgeprägt wird.

Vorteilhafte Ausgestaltungen und Weiterbildungen des erfindungsgemäßen verfahrenstechnischen Apparats ergeben sich aus den abhängigen Ansprüchen.

Durch die erfindungsgemäße Anordnung und/oder Ausgestaltung der Prallplatte wird der Impuls von auftreffenden Fluidtropfen nach unten abgelenkt. In der Folge breitet sich der Film auf der Prallplatte weniger stark nach oben aus als bei bisher bekannten Lösungen.

Dies kann beispielsweise durch eine Schrägstellung gegen die Vertikale und/oder durch eine geeignete Krümmung der Prallplatte erreicht werden. Diesbezügliche geeignete und bevorzugte Ausführungsformen werden unten stehend eingehend erläutert.

Dies beeinflusst den Filmabrissvorgang an der Kante der Prallplatte dahingehend, dass (a) weniger Tropfen im oberen Bereich der Prallplatte gebildet werden, da sich der Film nicht so stark ausgebreitet hat, und/oder (b) die Flugbahn der Tropfen weniger stark nach oben gerichtet ist. Mit anderen Worten besitzen die sich von der Kante der Prallplatte ablösenden Tropfen eine geringere Flughöhe und treffen dementsprechend auch auf einer tiefer liegenden Stelle der Gehäusewand auf. Darüber hinaus haben diese Tropfen eine flachere, d.h. weniger nach oben gerichtete Flugbahn. Als Konsequenz tragen diese Tropfen überdies einen weniger stark nach oben gerichteten Impuls in den Film ein als bei der aus dem Stand der Technik bekannten Lösung.

Hieraus ergeben sich u.a. zwei wesentliche Vorteile der erfindungsgemäßen Lösung:
1. Der Abstand zwischen dem Zulauf und über dem Zulauf liegenden Einbauten, insbesondere trennwirksamen Einbauten, kann aufgrund der geringer ausfallenden vertikalen Ausdehnung des Fluidfilms auf der Gehäusewand kleiner gewählt werden. Dies reduziert die Investitionskosten.
2. Die vertikale Ausdehnung des Fluidfilms nimmt bei höheren Strömungsgeschwindigkeiten im Zulauf weniger stark zu als bei der aus dem Stand der Technik bekannten Lösung. Eine spätere Erhöhung der Strömungsgeschwindigkeit (z.B. im Rahmen einer Kapazitätserweiterung) ist demnach weniger stark durch die damit verbundene größere vertikale Ausdehnung des Films limitiert.

Des Weiteren ist die erfindungsgemäße Lösung auch im Hinblick auf eine verbesserte Gasverteilung vorteilhaft. Sie reduziert im Vergleich zur vertikal stehenden Prallplatte die Fehlverteilung der Gasströmung in die darüber liegende Einbauten, bei gleichzeitig hoher Abscheideleistung der Flüssigkeitstropfen im Zulauf.

Als zumindest annähernd horizontal ausgerichteter Zulauf im Sinne der vorliegenden Erfindung wird ein Zulauf verstanden, dessen Längsachse (welche mit der Strömungsrichtung zugeführten Fluids zusammenfällt) sich deutlich mehr in horizontaler als in vertikaler Richtung erstreckt. Im Konkreten wird ein Zulauf als zumindest annähernd horizontal ausgerichtet angesehen, welcher bis zu einem Winkel von ±20° gegen die Horizontale geneigt ist. Insbesondere zielt die Erfindung jedoch auf Zulaufausgestaltungen ab, bei denen optisch kein Abweichen von einer horizontalen Ausrichtung ausmachbar ist, ist jedoch nicht auf solche Ausgestaltungen beschränkt.

Als "horizontal von der Mündung des Zulaufs beabstandet angeordnet" wird eine Prallplatte verstanden, welche in horizontaler Richtung von der Mündung des Zulaufs beabstandet und dort angeordnet ist. Darunter wird hingegen nicht eine horizontale Anordnung der Prallplatte verstanden. Der Abstand kann beispielsweise als Länge einer gedachten Linie von einem Mittelpunkt der Mündung des Zulaufs in horizontaler Richtung bis zu einem Schnittpunkt mit der Prallplatte ausgedrückt werden.

Es sei an dieser Stelle bemerkt, dass sich für die Zwecke dieser Beschreibung die Angabe "vertikal" auf eine Richtung in bzw. entgegen einer Richtung der Schwerkraft bezieht. Die Angabe "horizontal" bezieht sich entsprechend auf eine Richtung innerhalb einer Ebene senkrecht zu der Richtung der Schwerkraft.

Im Allgemeinen kann die Prallplatte über im Wesentlichen jeweils parallel verlaufende, zumindest annähernd vertikale und/oder zumindest annähernd horizontale Seitenkanten verfügen. Abweichungen hiervon, bspw. das Vorsehen einer runden oder elliptisch ausgeformten Prallplatte, liegen jedoch ebenfalls innerhalb des Erfindungsgedankens.

Die Abscheideeinheit kann zwei im Wesentlichen horizontal angeordnete Bleche umfassen, welche die Ober- und die Unterkante der Prallplatte mit der Gehäusewand des Apparats verbinden. Eine solche Ausgestaltung ist bereits in EP 1 018 360 A1 gezeigt. Alternativ ist jedoch eine unmittelbare Verbindung der Prallplatte mit der Gehäusewand des Apparats möglich. Beispielsweise ist die Prallplatte an ihrem oberen Rand mit der Gehäusewand des Apparats verbunden.

Die Prallplatte kann bezüglich ihrer horizontalen Erstreckung an die Form der inneren Wand des Gehäuses des Apparats angepasst sein. Dies lässt sich insbesondere dadurch bewerkstelligen, dass annähernd horizontale Seitenkanten der Prallplatte eine Krümmung aufweisen, welche mit der Krümmung der Gehäusewand korreliert. Eine entsprechende Lösung ist bereits aus EP 1 018 360 A1 bekannt.

In einer vorteilhaften Ausführungsform ist der erfindungsgemäße verfahrenstechnische Apparat als Kolonne und/oder als schlanke Säule und/oder mit zumindest im Wesentlichen zylindrischem Gehäuse ausgestaltet. Der Apparat kann jedoch ebenfalls alternative Gehäuseformen aufweisen, sofern dies zweckdienlich erscheint, ohne von dem Erfindungsgedanken abzuweichen. So können bestimmte Einbauten und/oder Anbauten ein Abweichen von einer zylindrischen Gehäuseform vorgeben. So ist beispielsweise auch ein Apparat mit einer mehr- oder vieleckigen Gehäuseform von der Erfindung umfasst.

Wird der Apparat als Kolonne vorgesehen, kann diese Einbauten, insbesondere trennwirksame Einbauten, aufweisen. Dafür kommen insbesondere, aber nicht ausschließlich, Füllkörper, Packungen oder Böden in Betracht.

In einer weiteren nicht einschränkenden Ausführungsform ist der erfindungsgemäße Apparat als Abscheider ausgestaltet, wobei der Fachmann eigenständig eine zweckmäßige Gehäusegestaltung vorsehen wird. Abscheider sind dem einschlägigen Fachmann geläufig, wodurch sich weitere Erläuterungen erübrigen. Im Zusammenhang mit der vorliegenden Erfindung bietet sich insbesondere die Realisierung eines Abscheiders zur Auftrennung eines Zwei- oder Mehrphasenstroms an.

Im Allgemeinen kann der erfindungsgemäße Apparat als beliebiger geeigneter verfahrenstechnischer Apparat ausgestaltet sein und ist keineswegs auf die zuletzt erläuterten Ausführungsformen beschränkt.

Gemäß einer weiteren vorteilhaften Ausgestaltung ist dem erfindungsgemäßen Apparat über den Zulauf ein zweiphasiges Fluid zuführbar. Ein solcher Zulauf wird im Allgemeinen auch für das Zuführen eines mehrphasigen Fluids geeignet sein. Wie bereits erläutert, erweist sich der erfindungsgemäße verfahrenstechnische Apparat als besonders vorteilhaft im Zusammenhang mit dem Zuführen oder Eindüsen von zwei- oder mehrphasigen Fluiden. So werden bei einem Fluid, welches ein Gas/Flüssigkeits-Gemisch aufweist, besonders gute Verbesserungen des Strömungsregimes erhalten, da ein solches Fluid üblicherweise einen Gasstrom aufweist, welcher vergleichsweise hoch beschleunigte Flüssigkeitsanteile mitführt. Die hier konkret erzielbaren Verbesserungen sind bereits erläutert worden. Allerdings werden oben beschriebene Vorteile auch erhalten, wenn dem Apparat ein einphasiges Fluid zugeführt wird, nämlich insbesondere in Bezug auf eine optimierte horizontale und/oder vertikale Verteilung des Fluids innerhalb des Apparats.

In einer besonders bevorzugten Ausführungsform ist die Prallplatte gegen die Vertikale geneigt angeordnet, wobei die dem Zulauf zugewandte Fläche der Prallplatte nach unten verschwenkt ausgerichtet ist. Durch diese Neigung der Prallplatte wird der Impuls des auftreffenden Fluids, und insbesondere auftreffender Flüssigkeitstropfen, nach unten abgelenkt. Dabei wird dem Fluid eine nach unten gerichtete Impulskomponente aufgeprägt. Die hierdurch erreichbaren vorteilhaften Effekte sind bereits oben beschrieben worden. Diese vorgeschlagene leichte geometrische Modifikation begünstigt die Gleichverteilung eines durch den Zulauf einströmenden Gases, und besonders wird die oben beschriebene Filmbildung auf der Gehäusewand des Apparats in erheblichem Ausmaß vorteilhaft beeinflusst.

In Bezug auf die letztgenannte Ausführungsform wird eine vorteilhafte Weiterbildung des erfindungsgemäßen Apparats vorgeschlagen, bei der die Prallplatte mit einem Winkel von 5° bis 20°, insbesondere von 7,5° bis 15°, und insbesondere mit einem Winkel von 10°, gegen die Vertikale geneigt ist. Eine moderate Neigung der Prallplatte innerhalb der hier vorgeschlagenen Winkelbereiche hat sich hinsichtlich einer Eindämmung von Fehlverteilungen zugeführter Flüssigkeitsanteile des Fluids und andererseits hinsichtlich einer Gleichverteilung zugeführter Gasanteile des Fluids als vorteilhaft erwiesen. Der Neigungswinkel gegen die Vertikale ist bevorzugt, aber nicht notwendigerweise über die gesamte Breite der Prallplatte konstant.

Sofern die Prallplatte höchstens im Schnitt mit einer horizontalen Ebene, nicht aber mit einer vertikalen Ebene, eine Krümmung aufweist, lässt sich eine oben vorgeschlagene Neigung der Prallplatte gegen die Vertikale unmittelbar anhand des Winkels der Schnittgerade der Prallplatte mit einer vertikalen Ebene durch die Hauptachse des Apparats gegen die Vertikale bzw. gegen die Hauptachse des Apparats bestimmen bzw. einstellen. Alternativ lässt sich die Neigung der Prallplatte gegen die Vertikale bestimmen, indem die Neigung des Normalenvektors der dem Zulauf zugewandten Fläche der Prallplatte gegen die Horizontale bestimmt wird. Entsprechend lässt sich mit geeigneten mathematischen Methoden die Neigung einer Prallplatte, welche eine Krümmung aufweist, gegen die Vertikale bestimmen.

In einer weiteren vorteilhaften Ausgestaltung weist die Prallplatte eine trapezförmige Grundfläche auf. Eine derartige Form der Prallplatte erlaubt, die Prallplatte verglichen mit konkaven Prallplatten oder dergleichen einfacher herzustellen. Als Grundfläche wird dabei die Gestalt der Platte vor einer evtl. Krümmung oder sonstigen Bearbeitung verstanden. Diese Ausführungsform hat sich insbesondere bei Ausgestaltungen als vorteilhaft gezeigt, bei denen die Prallplatte gegen die Vertikale geneigt ist. Ist die Prallplatte gegen die Vertikale geneigt und ist dabei die dem Zulauf zugewandte Fläche der Platte nach unten verschwenkt, ist der untere Teil der Prallplatte weiter von der Einmündung des Zulaufs beabstandet als der obere Teil. Es hat sich andererseits bei bestimmten Betriebsbedingungen als vorteilhaft erwiesen, die Prallplatte - von der Mitte bzw. der Mittelachse des Apparats aus gesehen - so auszuführen, dass diese in Bezug auf ihre horizontale Ausdehnung sowohl im oberen als auch im unteren Bereich dasselbe oder ein vergleichbares Bogenmaß beschreibt. Dadurch erfährt das einströmende Fluid in jedem Bereich der Platte eine möglichst gleichartige Umlenkung. Wird die untere, zumindest annähernd horizontale Seitenkante der Platte daher kürzer ausgeführt als die obere, lässt sich der variierende Abstand der Platte vom Zulauf in dieser Hinsicht ausgleichen. Dabei ist bevorzugt, den unteren Teil der Prallplatte bzw. die untere horizontale Seitenkante zumindest so breit auszuführen, dass der Zulauf in radialer Richtung gesehen vollständig von der Platte abgedeckt ist. Diese Gestaltung wird beispielsweise bevorzugt, falls alle Tropfen im Zulauf auf die Platte treffen sollen, d.h. kein Tropfen darf ohne Kontakt mit der Prallplatte in Richtung zu der Wand durchfliegen. Die Berechnung dieser Mindestabdeckung, die breiter sein wird als der Öffnungsquerschnitt des Zulaufs, erfolgt damit nach den gleichen Regeln wie bei einem Trägheitsabscheider.

Insgesamt kann die Prallplatte so gestaltet werden, dass ihre dem Zulauf zugewandte Fläche größer als ein Öffnungsquerschnitt des Zulaufs ist. Beispielsweise wird die Prallplatte so dimensioniert, dass alle Flüssigkeitstropfen des Fluids, die eine lokale Flugrichtung mit einer Abweichung von einer Längsachse des Zulaufs bestimmt an der Mündung von maximal 20° aufweisen, auf die Prallplatte auftreffen. Die Flüssigkeitstropfen können nämlich in Abhängigkeit unter anderem von der Strömungsgeschwindigkeit, der Viskosität des Fluids, der Größe der Flüssigkeitstropfen und der Masse der Flüssigkeitstropfen eine Flugrichtung innerhalb des Zulaufs aufweisen, die nicht parallel zu der Längsachse des Zulaufs ist. Bei einer von der Längsachse abweichenden Flugrichtung bzw. Flugbahn könnten derartige Flüssigkeitstropfen an der Prallplatte vorbei fliegen, sofern die Prallplatte nicht ausreichend groß dimensioniert ist. Daher kann für die Dimensionierung der Prallplatte an dem Rand der Mündung bzw. des Öffnungsquerschnitts des Zulaufs eine gedachte Linie angelegt werden, die eine Neigung bezüglich der Längsachse des Zulaufs von 20° aufweist. Diese gedachte Linie wird dann gedanklich verlängert bis zu einer Stelle, an der die Prallplatte vorgesehen werden soll. Dieses Anlegen der gedachten Linie und Verlängern wird für jeden Punkt in einer Umfangsrichtung um die Längsachse durchgeführt, so dass ein gedachter Kreis an der Stelle entsteht, an der die Prallplatte vorgesehen werden soll. Dieser Kreis weist eine größere Kreisfläche als der Öffnungsquerschnitt des Zulaufs. Entsprechend wird die Prallplatte so dimensioniert, dass ihre dem Zulauf zugewandte Fläche mindestens diese Kreisfläche aufweist. Folglich wird eine Grundfläche eines Kegels, der Mantelfläche von der Flugrichtung der Flüssigkeitstropfen gebildet wird, auf die Stelle projiziert, an der die Prallplatte vorgesehen wird und die dem Zulauf zugewandte Fläche der Prallplatte mindestens so groß wie die Grundfläche des Kegels dimensioniert.

In einer weiteren bevorzugten Ausführungsform des erfindungsgemäßen verfahrenstechnischen Apparats weist die Prallplatte im Wesentlichen vertikal verlaufende Seitenkanten auf, welche zumindest bereichsweise eine dem Zulauf zugewandte, konkave Krümmung aufweisen. Mit anderen Worten ist bei dieser Ausführungsform die Prallplatte in vertikaler Richtung gesehen zumindest bereichsweise so gekrümmt, dass dem auftreffenden Fluid aufgrund dieser Krümmung eine nach unten gerichtete Impulskomponente aufgeprägt wird. Dabei kann insbesondere der obere Teil der Prallplatte eine solche Krümmung aufweisen.

Sofern die Prallplatte keine im Wesentlichen vertikal verlaufenden Seitenkanten aufweisen sollte, bspw. bei runder oder elliptischer Ausgestaltung der Platte, wird in diesem Zusammenhang eine Ausführungsform vorgeschlagen, gemäß der die Prallplatte in vertikaler Richtung gesehen zumindest bereichsweise eine dem Zulauf zugewandte, konkave Krümmung aufweist. Bevorzugt ist dabei, dass der Normalenvektor auf der dem Zulauf zugewandten Seite der Prallplatte zumindest im oberen Bereich der Prallplatte nach unten orientiert ist.

In einer weiteren Ausführungsform ist eine wie oben erläuterte konkave Krümmung der Prallplatte dergestalt realisiert, dass der Übergangsbereich zwischen einem horizontalen Blech der Abscheideeinheit, welches den oberen Rand der Prallplatte an der Innenseite des Gehäuses festlegt, und der Prallplatte in einer abgerundeten Kurvenform ausgestaltet ist. So kann einem in diesem Bereich auftreffenden Fluid automatisch eine nach unten gerichtete Impulsumlenkung aufgeprägt werden.

Eine vorstehend vorgeschlagene konkave Krümmung der Prallplatte kann ausdrücklich alternativ zu oder auch zusammen mit Ausführungsformen realisiert werden, welche eine Neigung der Prallplatte gegen die Vertikale vorsehen.

Die Abmessungen (insbesondere Höhe, Breite) und/oder der horizontale Abstand der Prallplatte von der Mündung des Zulaufs können sich an aus dem Stand der Technik offenbarten Werten orientieren, wie sie bspw. aus der EP 1 018 360 A1 bekannt sind. Wird eine gegen die Vertikale geneigte Prallplatte realisiert, kann dabei der Abstand der Mitte der Platte (in vertikaler Richtung gesehen) von der Mündung des Zulaufs als Meß- bzw. Einstellwert zugrunde gelegt werden.

### Beispiel

In zwei vergleichenden Versuchsreihen wurde ein Zulaufstrom mit einem enthaltenen Flüssigkeits-Volumenstrom zwischen 5, 10 und 20 m³/h auf eine mit einem Winkel von 10° gegen die Vertikale geneigte Prallplatte geleitet. Im Versuchsaufbau ist dabei die vertikale Ausdehnung des sich als Folge der Eindüsung des Zulaufstroms auf der Innenseite des Apparats ausbildenden, unerwünschten Flüssigkeitsfilms gemessen worden. Für die Versuchsreihen wurden dreidimensionale Simulationen der Gas-, Tropfen- und Wandfilmströmung durchgeführt, die alle relevanten Parameter beinhalten, einschließlich TropfenlFilm-Interaktion. Das Model wurde zunächst an Messwerten validiert, die für exakt vertikal orientierte Prallplatten verfügbar waren.

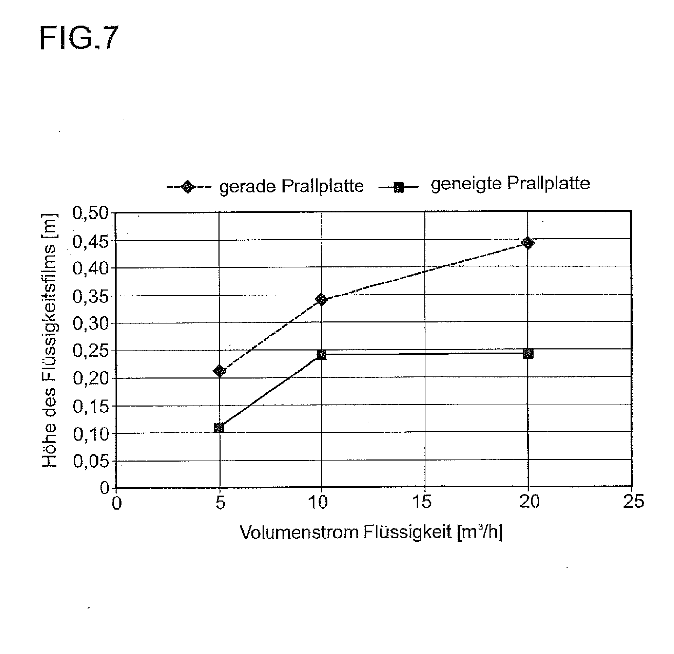

Zum Vergleich ist eine entsprechende Messreihe mit einer geraden, nicht gegen die Vertikale geneigten Prallplatte (gemäß Stand der Technik) aufgenommen worden. Die Versuchsreihen belegen, dass mit der geneigten Prallplatte eine erhebliche Verminderung der Höhe des unerwünschten Flüssigkeitsfilms auf der Gehäuseinnenwand hier in Rede stehender verfahrenstechnischer Apparate erreichbar ist. Für niedrige und hohe Werte des eingedüsten Flüssigkeüs-Volumenstroms konnte die Höhe des Flüssigkeitsfilms so ungefähr halbiert werden. Eine Darstellung der erhaltenen Ergebnisse findet sich in Fig. 7.

Die genauen Parameter für die Versuchsreihen sind dabei wie folgt. Der Kolonnendurchmesser ist 1000 mm. Der Durchmesser des Zulaufrohrs ist 400 mm. Die vertikale Abmessung der Prallplatte ist 500 mm. Die Breite der Prallplatte ist 70° im Bogenmaß. Die Gasgeschwindigkeit im Zulauf ist 10 m/s. Der horizontale Abstand der Prallplatte zum Zulauf ist 160 mm. Die Flüssigkeitsmenge im Zulauf ist in Fig. 7 angegeben. Die Geschwindigkeit des von unten kommenden, in der Kolonne vertikal strömenden Gases ist 2 m/s. Der Abstand des Zulaufs zum Boden oberhalb des Zulaufs ist 400 mm gemessen vom Mittelpunkt des Zulaufs aus. Die Prallplatte ist symmetrisch vor dem Zulauf angeordnet. Die Versuche wurden in einer Plexiglaskolonne mit einem zweiphasigen Fluid aus Wasser und Luft und einer reinen Gasströmung von unten durchgeführt. Der Zulauf des Gases erfolgt mit über eine Vollkegeldüse, Fabrikat Lechler, gleichmäßig im Querschnitt versprühter Flüssigkeit. Die Flüssigkeitstropfen sind im Eintrittsquerschnitt in die Kolonne gleichverteilt. Die Gasströmung von unten ist über den Kaminboden gleichverteilt über den Querschnitt. Der Kaminboden befindet sich 1030 mm unterhalb des Mittelpunkts des Zulaufs. Die Prallplatte ist gerade, d.h. nicht konkav oder konvex, in vertikaler Richtung. Die Prallplatte ist in horizontaler Richtung gleichmäßig gerundet, d.h. in Form eines Kreisausschnitts, der konzentrisch zu der Kolonne ist, und nicht abschnittsweise aus geraden Stücken zusammengesetzt. Das Maß in Fig. 7 gibt die vertikale Ausdehnung des Flüssigkeitsfilms auf der Kolonnenwand über der höchsten Stelle der Prallplatte an, d.h. am oberen Deckel.

Ausführungsbeispiele der Erfindung sind im Vergleich zu Lösungen gemäß Stand der Technik in der Zeichnung dargestellt und werden im Folgenden näher erläutert.

Es zeigen:
Figur 1 in einer schematischen, seitlich gesehenen Schnittdarstellung einen Ausschnitt aus einem gemäß Stand der Technik bekannten verfahrenstechnischen Apparat, welcher hier als Kolonne ausgestaltet ist, mit einer Abscheideeinheit für ein zugeführtes Fluid,
Figur 2 eine an Fig. 1 angelehnte Darstellung einer bevorzugten Ausführungsform eines erfindungsgemäßen verfahrenstechnischen Apparats, welcher beispielhaft als Kolonne ausgestaltet ist,
Figur 3 eine schematische, obere Schnittansicht des in Fig. 1 dargestellten Apparats gemäß Stand der Technik mit einer Darstellung der Einströmung eines zugeführten Fluids,
Figur 4 eine an Fig. 3 angelehnte Darstellung der bevorzugten Ausführungsform des erfindungsgemäßen verfahrenstechnischen Apparats aus Fig. 2,
Figur 5 eine perspektivische Darstellung der Abscheideeinheit mit Prallplatte des aus dem Stand der Technik bekannten Apparats aus Fig. 1 und Fig. 3,
Figur 6 eine an Fig. 5 angelehnte Darstellung der Abscheideeinheit mit Prallplatte der bevorzugten Ausführungsform des erfindungsgemäßen verfahrens-technischen Apparats aus Fig. 2 und Fig. 4, und
Figur 7 ein Diagramm mit der graphischen Darstellung der gemäß oben erläutertem Beispiel erhaltenen Ergebnisse.

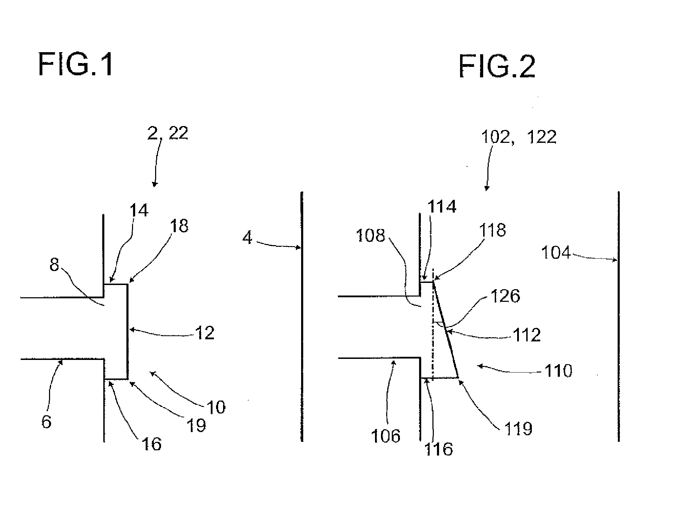

Fig. 1 zeigt in einer schematischen, seitlich gesehenen Schnittdarstellung einen Ausschnitt aus einem gemäß Stand der Technik bekannten verfahrenstechnischen Apparat 2. Der bekannte verfahrenstechnische Apparat 2 weist ein Gehäuse 4 und ein in das Gehäuse 4 mündenden Zulauf 6 für ein Fluid (Fluid hier nicht dargestellt) auf, wobei der Zulauf 6 horizontal ausgerichtet ist. Zwischen der Mündung 8 des Zulaufs 6 und der Mitte des Apparats 2 ist des Weiteren eine Abscheideeinheit 10 für das Fluid angeordnet, welche eine Prallplatte 12 für das Fluid aufweist. Diese Prallplatte 12 ist horizontal von der Mündung 8 des Zulaufs 6 beabstandet und ist dem Zulauf 6 zugewandt. Des Weiteren weist die Abscheideeinheit 10 ein oberes horizontales Blech 14 sowie ein unteres horizontales Blech 16 auf. Die Bleche 14, 16 dienen zur Festlegung der Prallplatte 12 an dem Gehäuse 4, und dienen gleichzeitig einer horizontalen Beabstandung der Prallplatte 12 von der Mündung 8 des Zulaufs 6. Schließlich verhindern die Bleche 14, 16 ein Überströmen sowohl der oberen horizontalen Seitenkante 18 als auch der unteren horizontalen Seitenkante 19 der Prallplatte 12. Im gezeigten Beispiel ist der bekannte verfahrenstechnische Apparat 2 als Kolonne 22 ausgestaltet. Etwaige Einbauten innerhalb der Kolonne 22 sind hier nicht dargestellt.

Fig. 2 zeigt in einer schematischen, seitlich gesehenen und an Fig. 1 angelehnten Schnittdarstellung einen Ausschnitt aus einer bevorzugten Ausführungsform eines erfindungsgemäßen verfahrenstechnischen Apparats 102. Der erfindungsgemäße Apparat 102 weist ein Gehäuse 104 und ein in das Gehäuse 104 mündenden Zulauf 106 für ein Fluid (hier nicht dargestellt) auf, wobei der Zulauf 106 wie in Fig. 1 horizontal ausgerichtet ist. Zwischen der Mündung 108 des Zulaufs 106 und der Mitte des Apparats 102 ist wiederum eine Abscheideeinheit 110 für das Fluid angeordnet, welche eine Prallplatte 112 für das Fluid aufweist. Diese Prallplatte 112 ist horizontal von der Mündung 108 des Zulaufs 106 beabstandet und ist dem Zulauf 106 zugewandt. Die Abscheideeinheit 110 weist ein oberes horizontales Blech 114 sowie ein unteres horizontales Blech 116 auf. Die Bleche 114, 116 dienen zur Festlegung der Prallplatte 112 an dem Gehäuse 104, und dienen gleichzeitig einer horizontalen Beabstandung der Prallplatte 112 von der Mündung 108 des Zulaufs 106. Schließlich verhindern die Bleche 114, 116 ein Überströmen sowohl der oberen horizontalen Seitenkante 118 als auch der unteren horizontalen Seitenkante 119 der Prallplatte 112. Die dargestellte bevorzugte Ausführungsform des erfindungsgemäßen verfahrenstechnischen Apparats 102 ist lediglich beispielhaft als Kolonne 122 ausgestaltet. Etwaige Einbauten innerhalb der Kolonne 122 sind hier nicht dargestellt.

Die Prallplatte 112 des erfindungsgemäßen Apparats 102 ist ferner so angeordnet, dass dem auf die Prallplatte 112 auftreffenden Fluid eine vertikal nach unten gerichtete Impulskomponente aufgeprägt wird. In den Apparat 102 ist ein Fluid - insbesondere ein zwei- oder mehrphasiges Fluid - über den Zulauf 106 und die Mündung 108 des Zulaufs 106 einspeisbar bzw. eindüsbar. Das Fluid, und insbesondere auch darin enthaltene Flüssigkeitsanteile, bspw. in Tropfenform, trifft dabei auf die dem Zulauf 106 zugewandte Fläche der Prallplatte 112. Diese Fläche ist bei dem vorliegenden Ausführungsbeispiel nach unten verschwenkt ausgerichtet, so dass die Prallplatte 112 insgesamt gegen die Vertikale 124 geneigt angeordnet ist. Zwischen der Vertikalen 124 und der Prallplatte 112 wird dabei der Winkel 126 gebildet. Dieser Winkel 126 beträgt vorzugsweise zwischen 5° und 20°.

Durch diese Anordnung der Prallplatte 112 wird der Impuls von auftreffendem Fluid nach unten abgelenkt. In der Folge breitet sich ein Flüssigkeitsfilm auf der Prallplatte 112 weniger stark nach oben aus als bei einer Lösung gemäß Fig. 1. Dies beeinflusst im Weiteren den Filmabrissvorgang an der Prallplatte 112 dahingehend, dass weniger Tropfen im oberen Bereich der Prallplatte 112 gebildet werden, da sich der Fluidfilm nicht so stark ausgebreitet hat, und die Flugbahn sich von der Prallplatte 112 ablösender Tropfen weniger stark nach oben gerichtet ist. Hierdurch treffen die sich von der Prallplatte 112 ablösenden Tropfen an tiefer liegenden Positionen auf die Innenwand des Gehäuses 104 auf.

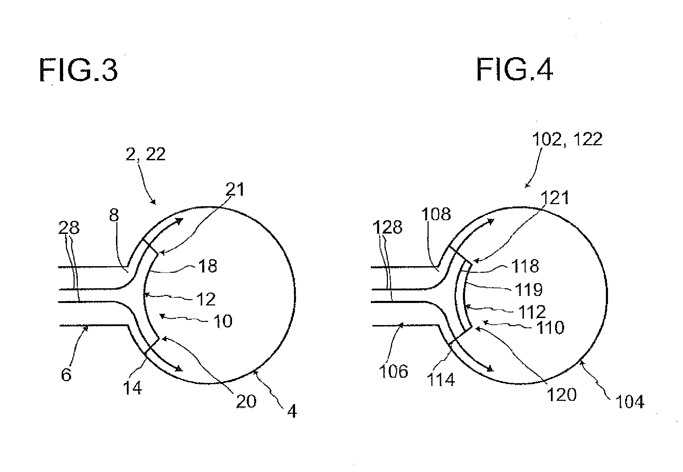

Fig. 3 zeigt eine schematische, obere Schnittansicht des in Fig. 1 dargestellten Apparats 2 gemäß Stand der Technik mit einer Darstellung der Einströmung eines zugeführten Fluids 28. Das Fluid 28 strömt durch den Zulauf 6 und die Mündung 8 in das Innere des Apparats 2 und trifft dort auf die dem Zulauf 6 zugewandte Fläche der Prallplatte 12 der Abscheideeinheit 10. In dieser Darstellung sind zusätzlich zu Fig. 1 die vordere vertikale Seitenkante 20 und die hintere vertikale Seitenkante 21 der Prallplatte 12 unterscheidbar. Die obere horizontale Seitenkante 18 weist wie die gesamte Prallplatte 12 eine Krümmung in horizontaler Richtung auf, welche mit der Form des Gehäuses 4 korreliert. Dadurch wird das Fluid 28 möglichst in eine Kreisbahn umgelenkt. Eine Lochung der Prallplatte 12, wie sie in EP 1 018 360 A1 vorgeschlagen wird, ist hier nicht dargestellt, da sie für die Darlegung der erfindungsgemäßen Lehre nicht relevant ist.

Fig. 4 zeigt eine schematische, obere Schnittansicht der in Fig. 2 dargestellten bevorzugten Ausführungsform des erfindungsgemäßen verfahrenstechnischen Apparats 102 und in einer an Fig. 3 angelehnten Darstellung die Einströmung eines zugeführten Fluids 128. Das Fluid 128 strömt durch den Zulauf 106 und die Mündung 108 in das Innere des Apparats 102 und trifft dort auf die dem Zulauf 106 zugewandte Fläche der Prallplatte 112 der Abscheideeinheit 110. In dieser Darstellung sind zusätzlich zu Fig. 2 die vordere vertikale Seitenkante 120 und die hintere vertikale Seitenkante 121 der Prallplatte 112 unterscheidbar. Des Weiteren sind - im Gegensatz zu Fig. 3 - aufgrund der Schrägstellung der Prallplatte 112 sowohl die obere horizontale Seitenkante 118 als auch die untere horizontale Seitenkante 119 in dieser Darstellung unterscheidbar. Die horizontalen Seitenkanten 118, 119 weisen wie die gesamte Prallplatte 112 eine Krümmung in horizontaler Richtung auf, welche mit der Form des Gehäuses 104 korreliert. Bei dieser vorteilhaften Ausgestaltung ist des Weiteren zu beachten, dass die untere horizontale Seitenkante 119 einen kürzeren Kreisbogen beschreibt als die obere horizontale Seitenkante 118. So ist erreicht, dass beide horizontalen Seitenkanten 118, 119 von der Mitte des Apparats 102 aus gesehen dasselbe Bogenmaß beschreiben. Dies bedeutet mit anderen Worten, dass, von der Mitte des Apparats 102 aus gesehen, der von jeder horizontalen Seitenkante 118, 119 abgedeckte Winkel hier identisch ist.

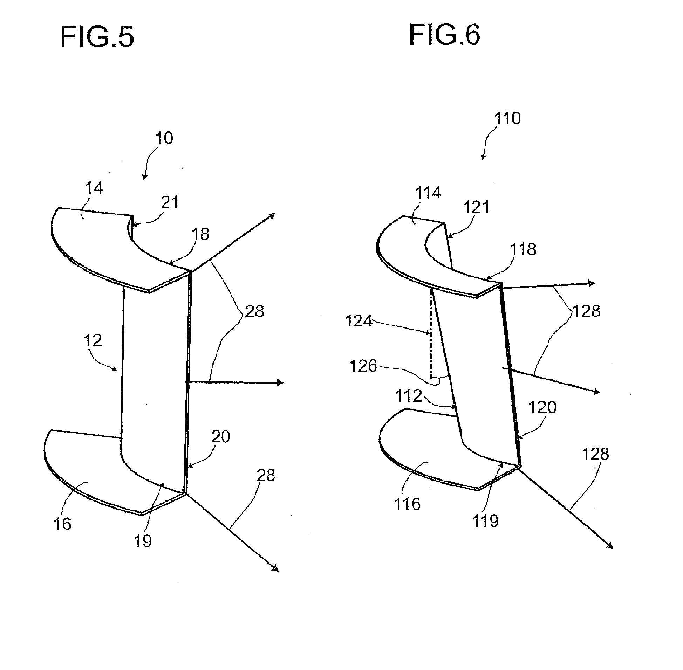

Fig. 5 zeigt eine perspektivische Darstellung der Abscheideeinheit 10 mit der Prallplatte 12 des aus dem Stand der Technik bekannten Apparats 2 aus Fig. 1 und Fig. 3. Die Abscheideeinheit 10 weist neben der Prallplatte 12 das obere horizontale Blech 14 sowie das untere horizontale Blech 16 auf. Die Prallplatte 12 wird durch die obere horizontale Seitenkante 18 und die untere horizontale Seitenkante 19 sowie die vordere vertikale Seitenkante 20 und die hintere vertikale Seitenkante 21 begrenzt. Durch die drei Pfeile schematisch angedeutet sind des Weiteren die Flugbahnen sich von der Prallplatte 12 ablösender Flüssigkeitstropfen eines zugeführten Fluids 28. Insbesondere an der oberen horizontalen Seitenkante 18 und im mittleren Bereich der Prallplatte 12 entstehen abgelöste Fluidströme bzw. Tropfen-Flugrichtungen, welche horizontal bis stark nach oben gerichtet sind. Dies führt u.a. zu einem unerwünscht stark vertikal ausgedehnten Flüssigkeitsfilm auf der Wand des Gehäuses 4 und/oder zu einer stark aufwärts gerichteten Gasströmung oberhalb des Zulaufs 6; die damit einhergehenden Nachteile sind bereits erläutert worden.

Fig. 6 zeigt eine an Fig. 5 angelehnte perspektivische Darstellung der Abscheideeinheit 110 mit der Prallplatte 112 der bevorzugten Ausführungsform des erfindungsgemäßen Apparats 102 aus Fig. 2 und Fig. 4. Die Abscheideeinheit 110 weist neben der Prallplatte 112 das obere horizontale Blech 114 sowie das untere horizontale Blech 116 auf. Die Prallplatte 112 wird durch die obere horizontale Seitenkante 118 und die untere horizontale Seitenkante 119 sowie die vordere vertikale Seitenkante 120 und die hintere vertikale Seitenkante 121 begrenzt. Durch die drei Pfeile schematisch angedeutet sind im Vergleich zu Fig. 5 die Flugbahnen sich von der Prallplatte 112 ablösender Flüssigkeitstropfen eines zugeführten Fluids 128. Aufgrund der Anordnung der Prallplatte 112, welche hier konkret eine Neigung der Prallplatte 112 gegen die Vertikale 124 unter einem Winkel 126 umfasst, wird dem auftreffenden Fluid 128 eine vertikal nach unten gerichtete Impulskomponente aufgeprägt. Als Folge ist erreichbar, dass insbesondere an der oberen horizontalen Seitenkante 118 und im mittleren Bereich der Prallplatte 112 entstehende abgelöste Fluidströme bzw. Tropfen-Flugrichtungen deutlich weniger nach oben gerichtet sind, oder sogar nach unten zeigen. Dadurch können unerwünscht stark vertikal ausgedehnte Flüssigkeitsfilme auf der Wand des Gehäuses 104 und/oder stark aufwärts gerichtete Gasströmungen im Bereich oberhalb des Zulaufs 106 vermindert oder sogar vermieden werden.

Fig. 7 zeigt ein Diagramm mit der graphischen Darstellung der gemäß oben erläutertem Beispiel erhaltenen Ergebnisse. Aufgetragen ist die vertikale Ausdehnung des sich auf der Innenwand des Gehäuses eines Apparats bildenden, unerwünschten Flüssigkeitsfilms, und zwar für unterschiedliche Flüssigkeitsbeladungen des Zulaufstroms und bei der Verwendung einer geraden Prallplatte (Stand der Technik) bzw. einer mit 10° nach unten geneigten Prallplatte (bezogen auf die dem Zulauf zugewandte Fläche der Prallplatte gegen die Vertikale); eine solche Ausgestaltung liegt dabei im Rahmen der Erfindung. Die gezeigten Versuchsreihen belegen, dass mit der geneigten Prallplatte eine erhebliche Verminderung der vertikalen Ausdehnung des sich auf der Gehäuseinnenwand bildendenden unerwünschten Flüssigkeitsfilms erreichbar ist. Für niedrige und hohe Werte des eingedüsten Flüssigkeits-Anteils im Zulauf konnte die vertikale Ausdehnung des Flüssigkeitsfilms sogar ungefähr halbiert werden.

### Bezugszeichenliste

- 2, 102: verfahrenstechnischer Apparat, Apparat
- 4, 104: Gehäuse
- 6, 106: Zulauf
- 8, 108: Mündung (Zulauf)
- 10, 110: Abscheideeinheit
- 12, 112: Prallplatte
- 14, 114: oberes horizontales Blech
- 16, 116: unteres horizontales Blech
- 18, 118: obere horizontale Seitenkante (Prallplatte)
- 19, 119: untere horizontale Seitenkante (Prallplatte)
- 20, 120: vordere vertikale Seitenkante (Prallplatte)
- 21, 121: hintere vertikale Seitenkante (Prallplatte)
- 22, 122: Kolonne
- 124: Vertikale
- 126: Winkel
- 28, 128: Fluid

## Patentansprüche

1. Verfahrenstechnischer Apparat (102), mit einem Gehäuse (104) und einem in das Gehäuse (104) mündenden Zulauf (106) für ein Fluid (128), wobei der Zulauf (106) zumindest annähernd horizontal ausgerichtet ist, und mit einer zwischen der Mündung (108) des Zulaufs (106) und der Mitte des Apparats (102) angeordneten Abscheideeinheit (110) für das Fluid (128), wobei die Abscheideeinheit (110) eine Prallplatte (112) für das Fluid (128) aufweist, welche horizontal von der Mündung (108) des Zulaufs (106) beabstandet angeordnet und dem Zulauf (106) zugewandt ist,
**dadurch gekennzeichnet, dass** die Prallplatte (112) so angeordnet und/oder zumindest in Teilbereichen so ausgestaltet ist, dass dem auf die Prallplatte (112) auftreffenden Fluid (128) eine vertikal nach unten gerichtete Impulskomponente aufgeprägt wird.

2. Verfahrenstechnischer Apparat nach Anspruch 1, **dadurch gekennzeichnet, dass** die Prallplatte (112) mindestens durch ein horizontales Blech (116) an der Wand des Apparats (104) gehalten wird

3. Verfahrenstechnischer Apparat (102) nach Anspruch 1 oder 2, **dadurch gekennzeichnet, dass** der Apparat (102) als Kolonne (122) und/oder als schlanke Säule und/oder mit zumindest im Wesentlichen zylindrischem Gehäuse (104) ausgestaltet ist.

4. Verfahrenstechnischer Apparat (102) nach einem der Ansprüche 1 bis 3, **dadurch gekennzeichnet, dass** der Apparat (102) als Abscheider ausgestaltet ist.

5. Verfahrenstechnischer Apparat (102) nach einem der Ansprüche 1 bis 4, **dadurch gekennzeichnet, dass** dem Apparat (102) über den Zulauf (106) ein zweiphasiges Fluid (128) zuführbar ist.

6. Verfahrenstechnischer Apparat (102) nach einem der Ansprüche 1 bis 5, **dadurch gekennzeichnet, dass** die Prallplatte (112) gegen die Vertikale (124) geneigt angeordnet ist, wobei die dem Zulauf (106) zugewandte Fläche der Prallplatte (112) nach unten verschwenkt ausgerichtet ist.

7. Verfahrenstechnischer Apparat (102) nach Anspruch 6, **dadurch gekennzeichnet, dass** die Prallplatte (112) mit einem Winkel (126) von 5° bis 20°, insbesondere von 7,5° bis 15°, und insbesondere mit einem Winkel (126) von 10°, gegen die Vertikale (124) geneigt ist.

8. Verfahrenstechnischer Apparat (102) nach einem der Ansprüche 1 bis 7, **dadurch gekennzeichnet, dass** die Prallplatte (112) eine trapezförmige Grundfläche aufweist.

9. Verfahrenstechnischer Apparat (102) nach einem der Ansprüche 1 bis 8, **dadurch gekennzeichnet, dass** die Prallplatte (112) im Wesentlichen vertikal verlaufende Seitenkanten (120, 121) aufweist, welche zumindest bereichsweise eine dem Zulauf (106) zugewandte, konkave Krümmung aufweisen.

10. Verfahrenstechnischer Apparat (102) nach einem der Ansprüche 1 bis 9, **dadurch gekennzeichnet, dass** die Prallplatte (112) in vertikaler Richtung gesehen zumindest bereichsweise eine dem Zulauf (106) zugewandte, konkave Krümmung aufweist.

11. Verfahrenstechnischer Apparat (102) nach einem der Ansprüche 1 bis 10, **dadurch gekennzeichnet, dass** das Fluid Flüssigkeitstropfen umfasst, wobei die dem Zulauf (106) zugewandte Fläche der Prallplatte (112) so dimensioniert ist, dass alle Flüssigkeitstropfen des Fluids, die eine lokale Flugrichtung mit einer Abweichung von einer Längsachse des Zulaufs (106) bestimmt an der Mündung von maximal 20° aufweisen, auf die Prallplatte (112) auftreffen.
